(19) Europäisches Patentamt
European Patent Office
Office européen des brevets

(11) Publication number: 0 215 109 B1

(12) # EUROPEAN PATENT SPECIFICATION

(45) Date of publication of the patent specification: 13.09.89

(51) Int. Cl.4: B 01 D 19/04, B 01 D 13/00, C 08 G 77/46

(21) Application number: 86902200.4

(22) Date of filling: 21.03.86

(86) International application number: PCT/US 86/00560

(87) International publication number: WO 86/05411 (25.09.86 Gazette 86/21)

(54) **SILICONE-ALKYLENE OXIDE COPOLYMERS AS FOAM CONTROL AGENTS IN ULTRAFILTRATION PROCESSES.**

(30) Priority: 22.03.85 US 714831

(43) Date of publication of application: 25.03.87 Bulletin 87/13

(45) Publication of the grant of the patent: 13.09.89 Bulletin 89/37

(84) Designated Contracting States: AT BE CH DE FR GB IT LI LU NL SE

(56) References cited: US-A-27 541

(73) Proprietor: UNION CARBIDE CORPORATION, 39 Old Ridgebury Road, Danbury Connecticut 06817 (US)

(72) Inventor: AUSTIN, Paul, Edwin, 20 Meadow Lane, Katonah, NY 10536 (US)

(74) Representative: Freiherr von Pechmann, Eckehart, Patentanwälte Wuesthoff- v. Pechmann-Behrens- Goetz Schweigerstrasse 2, D-8000 München 90 (DE)

EP 0 215 109 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBER, STOCKHOLM 1989

## Description

## Background of the Invention

### 1. Field of the Invention

This invention generally relates to ultrafiltration processes and the use of silicone-alkylene oxide copolymers as foam controlling agents. These silicone-alkylene oxide copolymers are effective in controlling foaming prior to the ultrafiltration process yet they do not foul the ultrafiltration filter membranes in subsequent processing.

### 2. The Prior Art

Ultrafiltration is a technique for separating dissolved molecules on the basis of size by passing a solution through an infinitesimally fine filter. This ultrafilter is a tough, thin, selectively permeable membrane which retains most macromolecules above a certain size, while allowing most smaller molecules, including solvent, to pass into the filtrate. Very small molecules such as solvents, salts, amino acids and sugars generally pass through the membrane quantitatively. Thus, ultrafiltration provides a retained fraction (retentate) which is enriched in large molecules, and a filtrate which contains fern, if any, of these molecules.

The performance parameter most commonly optimized during ultrafiltration is the filtration rate (flux). The flux is dependent on many variables such as pressure, flow, temperature, concentration and media components. What is meant by media components are the products in the solution.

For some systems, when flow, pressure, temperature and concentration are maintained constant over time, flux will also be stable. However, often the flux will decrease rapidly with time even when these variables are held constant. This loss in output is called membranes fouling and it is the major performance limitation in ultrafiltration. Understanding its causes and controlling its effects are of key importance.

Howell and Velicangil, "Theoretical Considerations of Membrane Fouling and Its Treatment with Immobilized Enzymes for Protein Ultrafiltration", Journal of Applied Polymer Science, Vol. 27 (1982), described three phases in flux loss with time. The gel layer of retained species forms on the membrane in seconds. Over a period of minutes adsorption of constituents from the media on the membrane takes place. In the time frame of hours, the gel layer on the membrane may become unstable resulting in a less permeable layer. These effects of adsorption and gel layer instability are the principle causes of fouling. They result in lower system output than would be expected based on the solution and operating conditions.

The formulation of the medium which contains fouling agents can be modified to reduce membrane fouling. Often, alternative non-fouling components may be substituted or the concentration of fouling components reduced to increase filtration rate. Antifoams are a prime example of a medium component which can cause fouling.

The previously known foam controlling compositions have been formulated almost exclusively from dimethylpolysiloxane either alone or in admixture with finely divided silica. The most widespread method for achieving dispersion in an aqueous medium was to prepare the antifoam compositions employing an organic solvent or as an aqueous emulsion employing emulsifying agents.

Silicone foam controlling formulations are utilized in the preparation of drugs by fermentation processes where the production of foam in the fermentation broth often occurs. With the advent of ultrafiltration as a filtration means, these conventional antifoams are no longer feasible since they tend to foul the membrane.

Unexpectedly, a class of materials known generally as silicone-alkylene oxide copolymers are highly effective in controlling foaming while also being compatible with ultrafine filtration membranes in that the filtration membranes are not fouled or permanently clogged as they tend to be with conventional antifoam formulations. Moreover, such copolymers are effective in the absence of dispersion emulsifiers, organic solvents and finely divided insoluble matter.

In US-A-3 712 868 ethylene oxide modified silicones are generically mentioned as illustrative antifoams. However, the number and nature of the oxyalkylene units in the polyoxyalkylene group has been found to be narrowly critical for the purpose of defoaming properties. Furthermore, the patent makes no reference to ultrafiltration compatibility.

US-A-3 414 479 illustrates the utility of polyether modified polysiloxanes for the purpose of controlling or inhibiting foam formation in submerged growth fermentations. No mention is made of the mechanism of producing or controlling well defined cloud point materials. Additionally, no structural information is included in the patent itself except for vague terms such as "organosilicon copolymers" and "copolymerization propyleneoxide and dimethylsilicon." The patent makes no reference to ultrafiltration compatibility, and no mention of filtration processes whatsoever.

US-A-4 384 976 likewise teaches a foam inhibiting composition utilizing a polysiloxane-polyether block copolymer. However this reference includes in the antifoam emulsifying agents, oils and soaps likely to foul the ultrafiltration membrane.

The US-Re-27 541 describes dimethyl siloxane alkylene oxide copolymers as foam stabilisers in a process for producing flexible polyurethane foams.

Thus, as can be appreciated, there continues to be a need for an antifoam which would at once be effective and yet not result in membrane fouling.

## Objectives of the Invention

The principle object of the present invention is to provide a foam controlling agent that is compatible with ultrafiltration processes. By compatible what is meant is that either membrane fouling does not occur or if it does occur, it is readily reversed by conventional cleaning, such as flushing with cold water or a mild bleach solution.

Another object of the present invention is to provide a foam controlling agent that has a sharp cloud point. This is sought because above the cloud point there is effective antifoaming whereas below the cloud point the agent is not effective in controlling foam and becomes water soluble.

Another object of the present invention is to provide a foam controlling agent with a cloud point in the range of 25°C. This temperature is deemed significant insofar as most fermentation reactions occur above 25°C and thus this is the cloud point necessary to obtain an effective antifoam.

Yet another object of the present invention is to provide an antifoaming agent which minimizes membrane fouling.

## Summary of the Invention

The present invention provides as a foam controlling agent a silicone-alkylene oxide copolymer of the general formula:

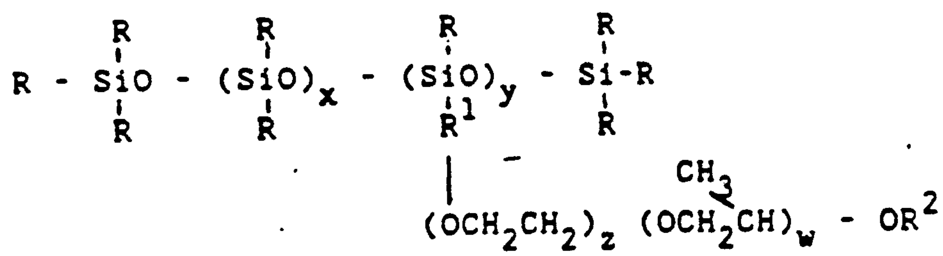

This antifoaming agent is particularly useful in ultrafiltration processes. As a foam controlling agent, this silicone-alkylene oxide copolymer exhibits a sharp cloud point in the range of 25°C, is very compatible with the ultrafiltration membrane and minimizes membrane fouling.

## Detailed Description of the Invention

In accordance with the present invention there is provided a method for controlling foam in processes subsequently employing ultrafiltration by utilizing as the antifoam agent, at least 5 ppm off a silicone-alkylene oxide copolymer of the general formula:

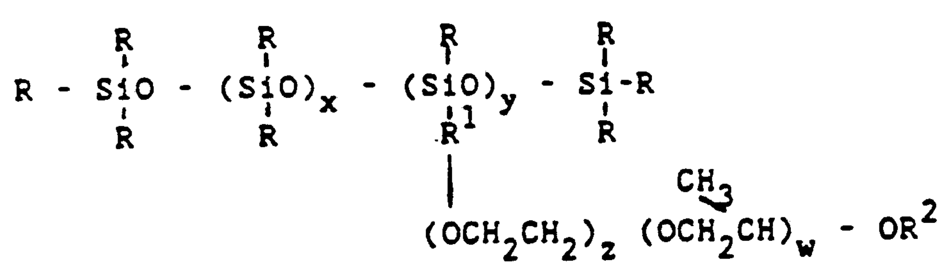

wherein

A is individually hydrogen or an alkyl group containing from one to three carbon atoms, preferably a methyl group;

$R^1$ is an alkylene group containing from three to six carbon atoms;

$R^2$ is selected from the group consisting of hydrogen, an alkyl group containing one to five carbon atoms, an acyl group containing one to five carbon atoms or a trialkylsilyl group, preferably $R^2$ is hydrogen or a methyl group;

x has a value of 0 to 200, preferably 10 to 80 and most preferably 13 to 30:

y has a value greater than 1 but less than or equal to 80, preferably 3 to 50 and most preferably 3 to 13;

z has a value of 1 to 40, preferably 5 to 15, and

w has a value of 5 to 120, preferably 15 to 45.

With regard to the R substituent, the greater the number of carbon atoms the lower the cloud point temperature. Furthermore, on each silicon there should be no more than one instance where R is hydrogen. Throughout the copolymer R may be the same or different.

With regard to the value of x, it has been found that the larger the value of x the less compatible the silicone-alkylene oxide copolymer will be with the ultrafiltration process.

The ethylene oxide and propylene oxide groups attached to $R^1$ may be in either random or block order, no advantage being discerned to either mode.

Likewise, it has been found that certain combinations yield specific results. In this regard, to be an effective antifoam it has been found preferable that the ratio x/y should be equal to or greater than zero but yet less than or equal to ten. More preferably, the ratio is $2 \leqslant x/y \leqslant 7$.

The most important requirement is the capability of the silicone-alkylene oxide copolymer to precipitate or cloud from solution at or about 25°C and, therefore, to act as a foam control agent above 25°C.

To obtain a cloud point in the temperature range of 25°C, the ratio of w/z should be greater than one but less than six. Preferably, the ratio w/z is equal to 3.

The sharpness of the cloud point has been found to be influenced by the ratio

$$\frac{(z + w)(y)}{(x + y)}$$

and thus this value should be greater than 2 and preferably about 5.

The copolymer molecular weight can vary between 1 000 and 1 000 000. The least preferred antifoam agent has a molecular weight above 100,000. The most preferred antifoam agent has a molecular weight less than 10 000. The lower the molecular weight the more compatible the antifoam agent is with ultrafine filtration membranes.

The silicone-alkylene oxide copolymers used in the present invention are made by conventional hydrosilation technology between silanic hydrogen fluids and polyalkyleneoxide polyethers. This technology is described in general in "Chemistry Technology of Silicones" by W. Noll. Other references to this preparation include U.S. Patent Nos. 2 632 013; 2 637 738; 3 398 174; 4 490 416 and British Patent No. 955 916.

There is no one optimum copolymer formula for anti foam performances as long as the copolymer precipitates from solution at or around 25°C. For handling considerations (viscosity, etc.) and economics many compounds of suitable silicone chain length having proper mole percent alkyleneoxide pendent groups of sufficient carbon oxygen length are effective. Treatment with these compounds will provide control of foam formation. There is false economy to provide marginal quantity of alkyleneoxide moieties in the expectation that the silicone will itself eventually develop antifoam properties during fermentation. Similarly there is no reason to overmodify the compound with excess alkyleneoxide pendent groups.

A trend emerges in which once a desirable "loading" of pendent groups onto the silicone backbone has been obtained, the cloud point of the copolymer does not change from that of the unbound pendent group. Additionally, the length on the pendent polyether substituent group has a profound effect on the sharpness of the actual cloud point of the copolymer and the longer the polyether pendent group, the sharper the cloud point. The effect of polyether chain length on cloud point sharpness in the copolymer levels off after a chain length of approximately 1 500 M. Wt. for the polyether longer chain lengths produce not much greater effect. A sharp cloud point copolymer is desirable over a narrow well defined temperature range in order to be most effective as a foam control agent and compatible with ultrafiltration membranes. The most desirable temperature range is 15 to 30°C and most preferably 25 - 28°C.

The silicone-alkylene oxide copolymer can be added to the solution prior to or during the foam generating operation. The amount added will vary from 5 to 50 ppm depending upon the specific application. Additional antifoam can be added beyond 50 ppm but it is rarely needed and may increase the possibility that the ultrafilter membrane will become fouled.

Typically, ultrafiltration is finding greatest utility today in filtering fermentation broths and thus fermentation will be discussed at length herein, however it is readily apparent that its utility will expand as compatible antifoams, such as the present invention, are discovered. Thus, applications in pasteurizing beer, purifying ethanol and the like are envisioned.

Ultrafilters, like the familiar microporous membrane filters, retain particles on the basis of size. However, because ultrafilters must discriminate between much smaller particles than do standard membrane filters, the membrane is designed very differently.

A filter of this type consists of a thin polymeric film or skin supported on and bonded to a highly porous substrate. The substrate contributes strength and durability to the filter, but the thin skin is the actual ultrafiltration membrane and is placed on the upstream side, facing the fluid to be filtered. The skin layer must

be densely structured to be able to retain molecules, but because it is very thin (typically less than 2 µm), the resistance to flow caused by the dense structure is minimized. Since the skin is backed by a very open, porous substrate layer, flow rates through the filter are high.

Retained molecules and particles are rejected at the surface of the membrane and do not enter the porous structure of the substrate. Because of surface rejection, and because material which passes through the skin is much smaller than the pore diameter of the substrate, skinned membranes seldom become irreversibly plugged.

A second major difference between ultrafilters and microporous filters is in the definition of retention limits. As mentioned earlier, microporous membrane filters are given an absolute pore size rating, and will retain all particles larger than the pore diameter. Ultrafilters, however, are assigned nominal ratings, and will retain most molecules of a given size, while allowing some to pass.

Ultrafilters are commercially available from Millipore Corporation.

Ultrafilters retain most molecules above a nominal (approximate) limit, as well as some fraction of smaller molecules. They do not retain all molecules larger than an absolute cut-off size. The ability of many dissolved macromolecules to deform and squeeze through tight openings, as well as the complex nature of the retentive skin are two reasons for assigning nominal limits. In addition, since these filters perform separation on a molecular, rather than particulate scale, molecular interactions may affect the process so that it is not a simple mechanical screening.

Ultrafilters are available in several different selective ranges. The most open of these membranes will retain primarily very large macromolecules, such as immunoglobulins, and viruses. The least open types will retain molecules as small as sucrose or vitamin B-12. In all cases, the retentive abilities of the filters are described by nominal limits. The membrane will hold back most, but not all molecules above a designated size.

Ultrafilters presently are available in sizes that filter materials with nominal molecular weights of 1 000; 10 000; 30 000 and 100 000. These are commonly referred to as Daltons.

When a solution is first placed in an ultrafiltration apparatus, all solute species are uniformly distributed.

As soon as pressure is applied to the sample, solvent and small solute molecules begin to move rapidly through the membrane. However, macromolecules which cannot pass through the membrane are stopped at the surface of the filter. Because these polymers are large and therefore slow to diffuse back into the bulk solution, they accumulate in a concentrated layer on and just above the membrane. At this stage, while the boundary layer is forming, flow rate is controlled by membrane permeability and by the applied pressure, and filtration is said to be membrane-controlled.

If the pressure is raised, flow rate increases and therefore the concentration of molecules in the accumulating boundary layer increases. In many cases, a limiting concentration is reached when the polarized macromolecular layer becomes so concentrated that it forms a semi-solid gel layer. Concentration in the gel layer stops increasing, but further solute buildup can occur by thickening of the gel layer.

Flow rates are generally higher through looser membranes than through tighter membranes. Although membrane permeability differences are not apparent during gel-limited filtration, they may significantly affect flow rates in a membrane-controlled situation.

Increasing pressure will cause a less-than-proportional increase in flux until the boundary layer reaches its limiting concentration and forms a gel. Dilute solutions of highly diffusive molecules may not form a gel and therefore will remain responsive to pressure. This maximum effective pressure (usually less than 6.9 bar) will vary, depending on the concentration of the solution, the rate of back-transport of solute (primarily by agitation), and the solute's tendency to gel.

By sweeping retained solute molecules away from the boundary layer and redistributing them to the bulk solution, agitation effectively reduces concentration polarization and results in increased flow rates. In general, increased shear will produce increased flux, although as might be expected, agitation is more effective in boundary-limited operations than in membrane-controlled filtration, where there is little or no polarized layer to be removed.

Diluting a solution to reduce concentration polarization will allow higher filtrate flow rates, and dilution is therefore a useful tool for some solutions. But in most applications, this tactic will not reduce total operating time because of the greater value of fluids to be filtered.

Flux will increase as temperature increases, but once again the desire for greater flow rates must be weighed against the possibility of denaturation. The reasons for the thermal effect are straightforward: As temperature increases, the activity, mobility, and solubility of the solute molecules increases, solution viscosity decreases, and there is thus an overall reduced tendency to form a gel-polarized layer.

The conformation of a molecule in solution frequently depends on the charge density surrounding that molecule, and so changes in the ionic environment may alter the solute's diffusivity and ability to form a gel layer. (This is one method of altering the concentration at which the boundary layer gels). In this way, changes in pH, ionic strength and buffer species may all affect flow rate in directions which must be empirically determined for each solute-solvent system.

One general rule is that flow rates are enhanced by maximizing the solubility of the retained macromolecules. Flux increases because conditions which increase solubility decrease the tendency to gel and usually increase the diffusiveness of macromolecules.

As noted above the silicone-alkylene oxide copolymer employed as an anti foam greatly reduces the tendency of the membrane to foul. To the extent that any fouling does occur, cleaning is still available.

Cleaning is a fouling control technique effective with both adsorption and gel layer instability. If system and batch sizes allow for relatively short runs, it may be the best means for dealing with fouling. After fouling occurs to some acceptable level during processing the foulant is removed between processing runs. Choice of cleaning chemicals is based on the nature of the foulant. Several types of solutions may be required to both clean and sanitize the membrane system. Commonly, flushing with cold water or a mild bleach solution is utilized to clean the membrane.

Whereas the exact scope of the instant invention is set forth in the appended claims, the following specific examples illustrate certain aspects of the present invention and, more particularly, point out methods of evaluating the same. However, the examples are set forth for illustration only and are not to be construed as limitations on the present invention except as set forth in the appended claims. All parts and percentages are by weight unless otherwise specified.

## Examples

### Preparation of Copolymer

Many hydrocarbon modified polyether silicones were prepared via the following two-step procedure which consisted of, preparing silicone hydrogen modified silicones and subsequently reacting them with a polyethyleneoxide propyleneoxide allyl started polyether via platinum catalyzed hydrosilation.

The silanic fluids used as examples here are chosen from among a series to represent an illustration of their typical properties.

A. Preparation of Silanic Fluids

1. Preparation of $MD_{20}D'_{3.2}M$

To a 3 liter 3-necked round bottom flask fitted with a mechanical agitator, heating mantle and temperature controller, charge:

| | | |
|---|---|---|
| 241.5 g | $MD'_{55}M$ | $Me_3SiO(MeSiHO)_{55}SiMe_3$ |
| 183.0 g | MM | $Me_3SiOSiMe_3$ |
| 1775.4 g | $D_4$ | $(Me_2SiO)_4$ |
| 2.0 g | $CF_3SO_3H$ | |

Stir 20 hours at 30°C. Neutralize by overnight stirring with 5 g $NaHCO_3$ wet with 0.2 g water. Refine by pressure filtering through 5 µm pad. This intermediate had the following properties:

| | |
|---|---|
| Viscosity | = 42 $mm^2/s$ at 25°C |
| Refractive index at 25°C | = 1.402 |
| SiH Content $cm^3$ $H_2/g$ | = 39 |
| Empirical Formula | = $MD_{20}D'_{3.2}M$ |

2. Preparation of $MD_{40}D'_{6.4}M$

To a 3 liter 3-necked round bottom flask fitted with a mechanical agitator, heating mantle and temperature controller, charge:

| | | |
|---|---|---|
| 206.8 g | $MD'_{55}M$ | $Me_3SiO(MeSiHO)_{55}SiMe_3$ |
| 75.7 g | MM | $Me_3SiOSiMe_3$ |
| 1514.0 g | $D_4$ | $(Me_2SiO)_4$ |
| 1.8 g | $CF_3SO_3H$ | |

Stir 20 hours at 30°C. Neutralize by stirring 4 hours with 8 g $NaHCO_3$ wet with 0.2 g water. Refine by pressure filtering through a 5 µm pad. This intermediate had the following properties:

| | |
|---|---|
| Viscosity | = 50 $mm^2(/s$ at 25°C |
| Refractive index at 25°C | = 1.40 |
| SiH Content $cm^3$ $H_2/g$ | = 40.1 |
| Empirical Formula | = $MD_{40}D'_{6.4}M$ |

3. Preparation of $MD_{80}D'_{12.4}M$

To a 2 liter 3-necked round bottom flask fitted with a mechanical agitator, heating mantle and temperature controller, charge:

| | | |
|---|---|---|
| 117.5 g | $MD'_{55}M$ | $Me_3SiO(MeSiHO)_{55}$ |
| 18.1 g | MM | $Me_3SiOSiMe_3$ |
| 868.2 g | $D_4$ | $(Me_2SiO)_4$ |
| 1.0 g | $CF_3SO_3H$ | |

Stir 24 hours at 30°C. Neutralize by stirring 6 hours with 5 g $NaHCO_3$ wet with 0.8 g water. Refine by pressure filtering through a 5 µm pad. This intermediate had the following properities:

| | |
|---|---|
| Viscosity | = 143 $mm^2/s$ at 25°C |
| Refractive index at 25°C | = 1.402 |
| SIH Content $cm^2$ $H_2/g$ | =41.8 |
| Empirical Formula | = $MD_{80}D'_{12.8}M$ |

4. Preparation of $MD_{160}D'_5M$

To a 3 liter 3-necked round bottom flask fitted with a mechanical agitator, heating mantle and temperature contcoller, charge:

| | | |
|---|---|---|
| 38.4 g | $MD'_{55}M$ | $Me_3SiO(MeSiHO)_{55}SiMe_3$ |
| 17.9 g | MM | $Me_3SiOSiMe_3$ |
| 1443.6 g | $D_4$ | $(Me_2SiO)_4$ |
| 1.5 g | $CF_3SO_3H$ | |

Stir 20 hours at 30°C. Neutralize by stirring 6 hours with 5 g $NaHCO_3$ wet with 0.2 g water. Refine by pressure filtering through a 5 µm pad. This intermediate had the following properties:

| | |
|---|---|
| Refractive index at 25°C | = 1.39 |
| SiH Content $cm^3$ $H_2/g$ | = 9.1 |
| Empirical Formula | = $MD_{160}D'_5M$ |

5. Preparation of $MD_{160}D'_{25.6}M$

To a 2 liter 3-necked round bottom flask fitted with a mechanical agitator, heating mantle and temperature controller, charge:

| | | |
|---|---|---|
| 118.9 g | $MD'_{55}M$ | $Me_3SiO(MeSiHO)_{55}SiMe_3$ |
| 6.4 g | MM | $Me_3SiOSiMe_3$ |
| 874.6 g | $D_{774}$ | $(Me_2SiO)_4$ |
| 1.2 g | $CF_3SO_{3H}$ | |

Stir 19 hours at 30°C. Neutralize by stirring 3 hours with 8 g $NaHCO_3$ wet with 0.2 g water. Refine by pressure filtering through a 5 µm pad. This intermediate had the following properties:

| | |
|---|---|
| Viscosity | = 440 $mm^2/s$ at 25°C |
| Refractive index at 24°C | = 1.40 |
| SiH Content $cm^3$ $H_2/g$ | = 42.3 |
| Empirical Formula | = $MD_{160}D'_{25}M$ |

6. Preparation of $MD_{20}D'_{10}M$

To a 3 liter 3-necked round bottom flask fitted with a mechanical agitator, heating mantle and temperature controller, charge:

| | | |
|---|---|---|
| 421.1 g | $MD'_{55}M$ | $Me_3SiO(MeSiHO)_{55}SiMe_3$ |
| 88.8 g | MM | $Me_3SiOSiMe_3$ |
| 990.2 g | $D_4$ | $(Me_2SiO)_4$ |

Stir 20 hours at 30°C. Neutralize by stirring 6 hours with 5 g $NaHCO_3$ wet with 0.2 g water. Refine by pressure filtering through a 5 µm pad. This intermediate had the following properties:

| | |
|---|---|
| Viscosity | = 19.5 $mm^2/s$ at 25°C |
| Refractive index at 25°C | = 1.402 |
| SiH Contents $cm^3$ $H_2/g$ | = 100.1 |
| Empirical Formula | = $MD_{20}D'_{10}M$ |

B. Preparation of Copolymer From Silanic Fluids

All of the hydrosilylation reactions were carried out in an identical fashion and therefore only some representative examples are given here to illustrate the general procedure used in all the preparations.

1. Preparation of $MD_{20}D''_{3.2}M$

To a 22 liter 3-necked round bottomed flask fitted with a mechanical agitator, thermometer equipped with a Therm-O-Watch® temperature regulator, $N_2$ purge tube, reflux condenser vented to the hood, and a heating mantle, there will be reacted:

| | |
|---|---|
| 1,600 g | $MD_{20}D'_{3.2}M$ |
| 7,008 g | 22HA2000-OH |

$[CH_2=CHCH_2(OCH_2CH_2)_9(OCH_2$FIGFIG

| | |
|---|---|
| 3,000 g | Toluene |
| 3.5 ml | 3 % Pt as $H_2PtCl_6$ catalyst in ethanol |
| 400 ml | 1N HCl |
| 60 g | $NaHCO_3$ |

Procedure:
To the flask add the $MD_{20}D'_{3.2}M$ (1,600 g), 22HA2000-OH (7,008 g) and toluene (3,000 g). Heat the flask to 115°C to azeotropically remove 200 ml toluene and any trace amounts of $H_2O$, under a slight $N_2$ sparge, by use of a Dean Stark® trap. The temperature is lowered to 85°C and the flask is catalyzed with the Pt as $H_2PtCl_6$ catalyst in ethanol (3.5 ml), let the system exotherm to 91°C. Stir flask and contents for total of 75 minutes. Test for silanic hydrogen was negative. Add 1N HCl (400 ml) and stir at 90°C for 45 minutes. Reaction vessel cooled to 65°C and sodium bicarbonate (60 g) was charged to the flask, allowed to stir 1 hour. Entire flask charge was allowed to stand overnight at room temperature. Entire charge was refined by pressure filtration through a 4 µm pad. Toluene and water were removed under reduced pressure and finally by vacuum stripping at 100°C and 1.33 mbar. Further refinement by pressure filtration through a 5 µm pad was obtained. The compound had the following properties:

| | |
|---|---|
| Viscosity | = 800 $mm^2/s$ at 23°C |
| Flash Point | = 191 ± 3°C |
| 1 % Aqueous pH | = 6.80 |
| Cloud Point (0.1 % Aqueous) | = 25°C |
| Empirical Formula | $MD_{20}D''_{3.2}M$ |

2. Preparation of $MD_{40}D''_{6.4}M$

To a 22 liter 3-necked round bottomed flask fitted with a mechanical agitator, thermometer equipped with a Therm-O-Watch® temperature regulator, $N_2$ purge tube, reflux condenser and bean Stark® trap vented to the hood, and a heating mantle, there will be reacted:

| | |
|---|---|
| 1,600.0 g | $MD_{40}D'_{6.4}M$ |
| 7,774.6 g | 22HA2000-OH |
| 3,000.0 g | Toluene |
| 5 ml | 3 % Pt as $H_2PtCl_6$ catalyst in ethanol |
| 60 g | $NaHCO_3$ |

Procedure:
To the 22 liter flask add the $MD_{40}D'_{6.4}M$ (1,600 g), 22HA2000-OH (7,774.6 g) and toluene (3,000 g). Heat the flask to 115°C to azeotropically remove 200 ml toluene and any trace amounts of $H_2O$, under a slight $N_2$ sparge. The temperature is lowered to 85°C and the flask is catalyzed with the Pt as $H_2PtCl_6$ catalyst in ethanol (5.0 ml); let the system exotherm to 94°C. Stir flask and contents for a total of 75 minutes. Test for residual silanic hydrogen was negative. Add 1N HCl (400 ml) and stir at 90°C for 40 minutes. Reaction vessel cooled to 65°C and sodium bicarbonate (60 g) was charged to the flask, allowed to stir 1 hour. Entire flask charge was allowed to stand overnight at room temperature. Entire charge was refined by pressure filtration through a pad. Toluene and water were removed under reduced pressure and finally by vacuum stripping at 100°C and 1.33 mbar. Further refinement by pressure filtration through a 5 µm pad was obtained. The compound had the following properties:

| | |
|---|---|
| Viscosity | = 1,200 $mm^2/s$ at 23°C |
| Flash Point | = 221 ± 3°C |
| 1 % Aqueous pH | = 7.44 |
| Cloud Point (0.1 % Aqueous) | = 25°C |
| Empirical Formula | = $MD_{40}D''_{6.4}M$ |

3. Preparation of $MD_{80}D''_{12.8}M$

To a 1 liter 3-necked round bottomed flask fitted with a mechanical agitator, thermometer equipped with a Therm-O-Watch® temperature regulator, $N_2$ purge tube, reflux condenser and Dean Stark® trap vented to the hood, and a heating mantle, there will be reacted:

| | |
|---|---|
| 40 g | $MD_{80}D'_{12.8}M$ |
| 186 g | 22HA2000-OH |
| 200 g | Toluene |
| 0.4 ml | 3 % Pt as $H_2PtCl_6$ catalyst in ethanol |
| 3.0 g | $NaHCO_3$ |

Procedure:
To the 1 liter flask add the $MD_{80}D'_{12.8}M$ (40 g), 22 HA2000-OH (186 g) and toluene (200 g). Heat the flask to 115°C to azeotropically remove 50 ml toluene and any trace amounts of $H_2O$, under a slight $N_2$ sparge. The temperature is lowered to 85°C and the flask is catalyzed with Pt as $H_2PtCl_6$ catalyst in ethanol (0.4 ml), let the system exotherm to 101°C. Stir flask and contents for a total of 3 hours. Test for residual silanic hydrogen was negative. Add 1N HCl (40 ml) and stir at 90°C for 40 minutes. Reaction vessel cooled to 65°C and sodium bicarbonate (3.0 g) was charged to the flask, allowed to stir 1 hour. Entire flask charge was allowed to stand overnight at room temperature. Entire charge was refined by pressure filtration through a 4 µm pad. Toluene and water were removed under reduced pressure and finally by vacuum stripping at 100°C and 1.33 mbar. Further refinement by pressure filtration through a 5 µm pad was obtained. The compound had the following properties:

| | |
|---|---|
| Viscosity | = 1,200 $mm^2/s$ at 23°C |
| 1 % Aqueous pH | = 6.7 |
| Cloud Point (0.1 % Aqueous) | = 25°C |
| Empirical Formula | = $MD_{80}D''_{12.8}M$ |

4. Preparation of $MD_{20}D''_{10}M$

To a 1 liter 3-necked round bottom flask fitted with a mechanical agitator, thermometer equipped with a Therm-O-Watch® temperature regulator, $N_2$ purge tube, reflux condenser and bean Stark® trap vented to the hood, and a heating mantle there will be reacted:

| | |
|---|---|
| 37 g | $MD_{20}D'_{10}M$ |
| 175 g | 22 HA 848-OH |
| 200 g | Toluene |
| 0.2 ml | 3 % Pt as $H_2PtCl_6$ catalyst in Ethanol |
| 15.0 g | $NaHCO_3$ |

Procedure:
To the 1 liter flask add the $MD_{20}D'_{10}M$ (37 g), 22 HA 848-OH (175 g) and Toluene (220 g). Heat the flask to 115°C to azeotropically remove 40 ml toluene and any trace amount of $H_2O$, under a light $N_2$ sparge. The temperature is lowered to 90°C and the flask is catalyzed with Pt at $H_2PtCl_6$ catalyst in ethanol (0.2 ml), let the system exotherm to 100°C. Stir the flask and contents for a total of 2 hours. Test for residual silanic hydrogen was negative. Add 1N HCl (10 ml) and stir at 95°C for 1 h. Reaction vessel cooled to room temperature and sodium bicarbonate (15.0 g) was charged to the flask, allowed to stir 1 hour. Entire flask charge was allowed to stir 3 hours at room temperature. Entire charge was refined by pressure filtration through a 5 µm pad and then through a 2 µm pad. Toluene and water were removed under reduced pressure and finally by vacuum stripping at 100°C and 1,33 mbar. The compound had the following properties:

| | |
|---|---|
| Viscosity | 475 $mm^2/s$ at 23°C |
| 1 % Aqueous pH | 7.30 |
| Cloud Point (0.1 % aqueous) | 19°C |
| Empirical Formula | $MD_{20}D''_{10}M$ |

5. Preparation of $MD_{13}D''_{55}M$

To a 3 liter 3 necked round bottomed flask with a mechanical agitator, thermometer equipped with a Therm-O-Watch® temperature regulator, $N_2$ purge tube, reflux condenser and Dean Stark®, trap vented to the hood, and a heating mantle, there will be reacted:

| | |
|---|---|
| 15 gm | $MD_{13}D'_{5.5}M$ |
| 353 gm | 22 HA 5000 -OH |
| 500 g | Toluene |
| 0.4 ml | 3 % Pt as $H_2PtCl_6$ catalyst in ethanol |
| 10 gm | $NaHCO_3$ |

Procedure:
To the 3 liter flask add the $MD_{13}D'_{5.5}M$ (15 g), 22 HA 5000-OH (353 g) and toluene (500 g). Heat the flask to 115°C to azeotropically remove 25 ml toluene and any trace amounts of $H_2O$, under a slight $N_2$ sparge. The temperature is lowered to 85°C and the flask is catalyzed with Pt as $H_2PtCl_6$ catalyst in ethanol (0.4 ml), let the system exotherm to 100°C. Stir flask and contents for a total of 3 hours. Test for residual silanic hydrogen was negative. Add 1N HCl (400 ml) and stir at 90°C for 40 minutes. Reaction vessel cooled to 65°C and sodium bicarbonate (10.0 g) was charged to the flask, allowed to stir 1 hour. Entire flask chare was allowed to stand overnight at room temperature. Entire charge was refined by pressure filtration through a 4 µm pad. Toluene and water were removed under reduced pressure and finally by vacuum stripping at 100°C and 1.33 mbar.
The compound had the following properties:

| | |
|---|---|
| Viscosity | = 1,250 $mm^2/s$ |
| 1 % Aqueous pH | = 6.9 |
| Cloud Point (0.1 % Aqueous) | = 25°C |
| Empirical Formula | = $MD_{13}D''_{55}M$ |

6. Preparation of $MD''_1M$

To a 1 liter 3 necked round bottomed flask with a mechanical agitator, thermometer equipped with a Therm-O-Watch® temperature regulator, $N_2$ purge tube, reflux condenser and Dean Stark® trap vented to the hood, and a heating mantle, there will be reacted:

| | |
|---|---|
| 25 g | MD'M |
| 280 g | 22 HA 2000 -OH |
| 200 g | Toluene |
| 0.4 ml | 3 % Pt at $H_2PtCl_6$ catalyst in ethanol |
| 10.0 g | NaH $CO_3$ |

Procedure:
To the 1 liter flask add the $MD'_1M$ (25 g), 22 HA 2000 - OH (280 g) and toluene (200 g). Heat the flask to 115°C to azeotropically remove 25 ml toluene and any trace amounts of $H_2O$, under a slight $N_2$ sparge. The temperature is lowered to 85°C and the flask is catalyzed with Pt as $H_2PtCl_6$ catalyst in ethanol (0.4 ml), let the system exotherm to 98°C. Stir flask and contents for a total of 3 hours. Test for residual silanic hydrogen was negative. Add 1 N HCl (40 ml) and stir at 90°C for 40 minutes. Reaction vessel cooled to 65°C and sodium bicarbonate (10.0 g) was charged to the flask, allowed to stir 1 hour. Entire flask charge was allowed to stand overnight at room temperature. Entire charge was refined by pressure filtration through a 4 µm pad. Toluene and water were removed under reduced pressure and finally by vacuum stripping at 100°C and 1 hour. Further refinement by pressure filtration through a 5 µm pad was obtained. The compound had the following properties:

| | |
|---|---|
| Viscosity | = 600 $mm^2/s$ at 23°C |
| 1 % Aqueous pH | = 6.8 |
| Cloud Point (0.1 % Aqueous) | = 26°C |
| Empirical Formula | = $MD''_1M$ |

**Table A**

**Structures of Copolymers Prepared and Anitfoam Effectiveness Tested**

| Formula | Compound # | D'' = MeSiOR' R' Hydrophile | Cloud Point Observed °C |
|---|---|---|---|
| $MD_{20}D''_{3.2}M$ | I | 22HA2000-OMe | 25 |
| $MD_{40}D''_{6.4}M$ | II | 22HA2000-OMe | 25 |
| $MD_{80}D''_{12.8}M$ | III | 22HA2000-OMe | 25 |
| $MD_{80}D''_{12}M$ | IV | 35HA2600-OMe | 36 |
| $MD_{80}D''_{9.6}M$ | V | 40HA4000-OMe | 40 |
| $MD_{60}D''_{12}M$ | VI | 40HA4000-OMe | 40 |
| $MD_{80}D''_{15}M$ | VII | 40HA4000-OMe | 40 |
| $MD_{20}D''_{3.2}M$ | VIII | 22HA2000-OH | 25 |
| $MD_{40}D''_{6.4}M$ | IX | 22HA2000-OH | 25 |
| $MD_{13}D''_{5.5}M$ | X | 22HA2000-OH | 25 |
| $MD_{20}D''_{10}M$ | XI | 22HA2000-OH | 25 |
| $MD_{160}D''_{25.6}M$ | XII | 22HA2000-OH | 25 |
| $MD_{160}D''_{5.0}M$ | XIII | 22HA2000-OH | 25 |
| $MD_{20}D''_{3.2}M$ | XIV | 22HA848-OH | less than 8 |
| $MD_{13}D''_{5.5}M$ | XV | 22HA2000-OH | 25 |
| $MD_{20}D''_{3.2}M$ | A (Comp.) | 100HA 350-Me | 25 - 50 |
| $MD_{20}D''_{10}M$ | XVI | 22HA848-OH | 19 |
| $MD''M$ | XVII | 22 HA 2000-OH | 26 |
| $MD_{13}D''_{5.5}M$ | XVIII | 22 HA 5000-OH | 25 |

22HA2000-OMe

$$CH_2=CHCH_2(OCH_2CH_2)_9(OCH_2\overset{CH_3}{C}H)_{27}OCH_3$$

35HA2600-OMe

$$CH_2=CHCH_2(OCH_2CH_2)_{20.7}(OCH_2\overset{CH_3}{C}H)_{29.1}\text{-}OCH_3$$

40HA4000-OMe

$$CH_2=CHCH_2(OCH_2CH_2)_{36.4}(OCH_2\overset{CH_3}{C}H)_{41.4}\text{-}OCH_3$$

22HA848-OH

$$CH_2=CHCH_2(OCH_2CH_2)_{4.25}(OCH_2\overset{CH_3}{C}H)_{11.4}\text{-}OH$$

100HA350-OMe

$$CH_2{=}CHCH_2(OCH_2CH_2)_7OCH_3$$ -

22HA 5000 - OH

$$CH_2 = CHCH_2(OCH_2CH_2)_{25}(OCH_2CH(CH_3))_{67}OH$$

**Example 1**

Compound XII was dissolved in water at ambient temperature to a concentration of 100 ppm. The aqueous solution was then filtered via a nominal molecular weight filter of 10 000 Daltons made of polysulfone (Millipore Cos), and the flux was measured over a period of 60 minutes. Several important observations were made. First, the flux dropped in this trial but levelled off immediately. Subsequent flushing with cold water restored the filter flux, in this case to 98 % of the original flux. Second, even though Compound XII has an average molecular weight of about 64 600 Daltons, far in excess of the nominal filter limit, fouling is not worse than with lower molecular weight analogs. Third, when the filtrate is collected and the original retentate has been reduced or concentrated to one tenth of its original volume, analysis by Atomic Adsorption of the filtrate revealed $< 1$ppm of Compound XII and a ten-fold concentration of Compound XII or approximately 1000 ppm surfactant retained in the concentrated reservoir. This result demonstrates that none of Compound XII passes through the filter membrane, but is easily concentrated into the retentate without subsequent damage to the filter membrane or flux rate.

**Fermentations**

All the fermentations were carried out in an identical fashion; examples presented here are for illustrative purposes.

**Example 2**

The antifoaming efficiency of the Copolymer VIII was determined by adding with a micropipette increments of the copolymer to 11 liters of vigorously aerated broth liquor composition contained in a 14 liter glass measuring NBS Microferm® fermentor inoculated with E. Coli 104 at 37° C and aerated at 5 liters/minute of air at 400 rpm agitation. The broth liquor composition consisted of an aqueous dispersion as set forth in Table B.

The test was carried out with the composition at 37° C. Incremental addition of the polymer to the foaming liquor was continued until foaming was suppressed for a period of at least 22 hours and the total polymer addition (as parts per million) recorded. It was found that foaming was suppressed for 22 hours with the addition of 25 to 30 ppm of the copolymer at 37° C. A viable cell count at harvest was $3.3 \times 10^8$ cells/ml.

The fermentation broth produced containing the silicone antifoam at a concentration of 25 ppm at 32° C, was evaluated. Initially, the filtration rate drops as would be expected due to broth composition itself with or without antifoam, but within 5 minutes, the flux plateaus at a fixed high rate compared to conventional silicone antifoams whose rate may fall to zero. The flux remained constant over extended periods of time. The partial flux decrease is seen due to "coating" of the membrane surface, but does not proceed to extremes to the point of reducing filtration rates to zero. These filtration studies were performed using a 30 000 nominal molecular weight cut-off membrane, i.e., a stainless steel Pellicon® system and 0.465 $m^2$ (5 sq.ft) PTTK Cassette® (Millipore Corp.). In each case, the experiment was designed in such a fashion that non-filtered media were returned to the fermentation reservoir.

The filter membrane could be regenerated or restored to near original condition, something not possible when conventional antifoam emulsions are employed, by washing the filter membranes with pure water at temperatures below the cloud point of the anti foam employed. The flux rate was easily restored to 88.5 % of its original clear water flux rate following cold water flushing.

**Example 3**

The antifoaming efficiency of the Copolymer IX was determined by adding with a micropipette increments of the copolymer to 11 liters of a vigorously aerated broth liquor composition contained in a 14 liter glass measuring NBS Microferm® fermentor inoculated with E. Coli 104 at 37°C and aerated at 5 liters/minute of air at 400 rpm agitation. The broth liquor composition consisted of an aqueous dispersion of the ingredients mentioned in Example 2.

The test was carried out with the media at 37°C. Incremental addition of the polymer to the foaming liquor was continued until foaming was suppressed for a period of at least 22 hours and the total polymer addition (as parts per million) recorded. It was found that foaming was suppressed 22 hours with the addition of as little as 25 ppm of the organosilicon copolymer at 37°C. A viable cell count at harvest was $1.9 \times 10^9$ cells/ml.

Filtration of the fermentation broth produced containing the silicone copolymer Compound IX employed as a foam control agent yielded analogous results when performed according to the procedure outlined in Example 2. Above Compound IX's cloud point of 25°C, the silicone copolymer performed as an excellent antifoaming agent and subsequent ultrafiltration of the broth produced no irreversible filter fouling.

The filter membrane could be regenerated or restored to near original condition, something not possible when conventional antifoam emulsions are employed, by washing or flushing the filter membrane with pure water at temperatures below the cloud point of Compound IX during Example 2. The flux rate was easily restored to 100 % of its original clear water flux rate following cold water flushing.

**Example B**

The antifoaming efficiency of the hydrophile pendent group 22HA2000-OH was determined by adding with a micropipette increments of the hydrophile to 11 liters of a vigorously aerated broth liquor composition contained in a 14 liter glass measuring NBS Microferm® fermentor inoculated with E. Coli 104 at 37°C and aerated at 5 liters/minute of air at 400 rpm agitation. The broth liquor composition consisted of an aqueous dispersion of the ingredients mentioned in Example 2.

The test was carried out with the media at 37°C. Incremental addition of the polymer to the foaming liquor was continued until foaming was suppressed for a period of at least 22 hours and the total polymer addition (as parts per million) recorded. Surprisingly, it was found that foaming was suppressed 22 hours with the addition of as little as 20 to 30 ppm of the organo hydrophile 22HA2000-OH polymer at 37°C. A viable cell count at harvest was 3.3 x 10 cells/ml.

Filtration of fermentation broth produced containing the hydrophile 22HA2000-OH employed as a foam control agent yielded similar results when performed according to the procedure outlined in Example 2. Above the hydrophile 22HA2000-OH cloud point of 26°C, the silicone copolymer performed as an excellent antifoaming agent and subsequent ultrafiltration of the broth produced no total filter fouling.

The filter membrane could be regenerated or restored to near original condition, something not possible when conventional anti foam emulsions are employed at concentrations required to control foaming in fermentation beers, by washing or flushing the filter membrane with pure water at temperatures below the cloud point of 22HA2000-OH. The general trend with all the antifoaming agents tested was that the antifoam compound itself contributed negligibly to decreased flux rate when processed below the compound's cloud point. The flux rate was easily restored to 89 % of its original clear water flux rate following cold water flushing. This was an unexpected observation. The hydrophile 22HA2000-OH displayed excellent foam control properties in addition to ultrafiltration membrane compatibility. Above the 22HA2000-OH fluid's cloud point of 26°C in submerged growth fermentation of E. Coli, the compound demonstrated antifoaming capabilities. However, earlier investigations demonstrated that in a submerged growth fermentation for the production of ethanol with yeast, the 22HA2000-OH hydrophile was not as effective an antifoaming agent as the silicone-polyether copolymers, and hence is not totally comparable to silicone copolymer anti foaming agent. However the 22HA2000-OH hydrophile was non-detrimental to ultrafiltration, and was an excellent antifoaming agent in E. Coli fermentations.

**Example 4**

The antifoaming efficiency of Copolymer XV was determined by adding with a micropipette increments of the Copolymer to 11 liters of a vigorously aerated broth liquor composition contained in a 14 liter glass measuring NBS Microferm® fermentor inoculated with E. Coli 104 at 37°C and aerated at 5 liters/minute of air at 400 rpm agitation. The broth liquor composition consisted of an aqueous dispersion of the ingredients mentioned in Example 2.

The test was carried out with the media at 37°C. Incremental addition of the polymer to the foaming liquor was continued until foaming was suppressed for a period of at least 22 hours and the total polymer addition (as parts per million) recorded. It was found that foaming was suppressed 22 hours with the addition of as little as

25 ppm of the organosilicon copolymer at 37° C. A viable cell count at harvest was 3.5 x $10^9$ cells/ml.

Filtration of fermentation broth produced containing the silicone copolymer Compound XV employed as a foam control agent yielded analogous results when performed according to the procedure outlined in Example 2. Above Compound XV's cloud point of 25° C, the silicone copolymer performed as an excellent antifoaming agent subsequent ultrafiltration of the broth produced no total filter fouling.

The filter membrane could be regenerated or restored to near original condition, something not possible when conventional anti foam emulsions are employed, by washing or flushing the filter membrane with pure water at temperature below the cloud point of Compound XV. The flux rate was easily restored to 90 % of its original clear water flux rate following cold water flushing.

**Example C**

The antifoaming of the hydrophile pendent group 22 HA 2000-OH was determined by adding with a micropipette increments of the hydrophile to 2 liters of vigorously aerated broth liquor composition contained in a 5 liter glass graduated cylinder inoculated with activated Bakers yeast at 36° C and aerated at 1 liter/minute air. The broth liquor composition consisted of an aqueous dispersion of the following ingredients:

| | |
|---|---|
| Nutrient Broth | 8 g/l |
| Potatoe dextran | 2 g/l |
| Glucose | 200 g/l |
| Sodium Chloride | 1 g/l |
| $KH_2PO_4$ | 1 g/l |

The test was carried out with the composition at 36° C. Incremental addition of the hydrophile 22 HA 2000-OH to the foaming liquor was continued until foaming was suppressed for a period of at least 6 hours and the total hydrophile addition (as parts per million) recorded. It was found that foaming was suppressed for 6 hours with the addition of 600 ppm of the organic antifoam at 36° C. Evidence of ethanol production was determined by G. C. analysis. This amount (600 ppm) of hydrophile 22 HA 2000 - OH was considered excessive when compared to Compound IX or Compound XV which required less than 30 ppm of active copolymer when used in an identical manner. It is thus demonstrated that the hydrophile is not as universally active an antifoaming agent as any of the organosilicon copolymers tested.

**Example D**

The antifoam efficiency of a commercial antifoaming agent made of approximately 97 % polypropylene glycol mwt. 2025 (Onion Carbide SAG 5693®) was determined by adding with a micropipette increments of the antifoaming agent to 11 liters of a vigorously aerated broth liquor composition confined in a 14 liter glass measuring NBS Microferm® fermentor inoculated with E. Coli 104 at 37° C and aerated at 5 liters per minute of air at 400 Rpm agitation. The broth liquor composition consisted of an aqueous dispersion of the ingredients mentioned in Example 2.

The test was carried out with the media at 37° C. Incremental addition of the conventional organic glycol antifoaming agent to the foaming liquor was continued until foaming was suppressed for a period of at least 22 hours and the total addition (as parts per million) recorded. It was found that foaming was suppressed 22 hours with the addition of 500 ppm of the glycol based antifoaming agent at 37° C. A viable cell count at harvest was 4.1 x $10^9$ cells/ml.

Filtration of the fermentation bro produced, containing the glycol based antifoaming agent (SAG 5693®) employed as a foam control agent at a concentration of 500 ppm at 32° C, was evaluated. Initially, the filtration rate dropped as would be expected due to broth composition itself with or without foamcontrol agent, but within 5 minutes, the flux plateaued at a fixed high rate compared to conventional silicone emulsion antifoaming agent whose rate falls to zero. The flux remained constant over extended periods of time. The partial flux decrease is seen due to "coating" of the membrane surface, but does not proceed to extremes to the point of reducing filtration rates to zero at 500 ppm. These filtration studies were performed using a 30 000 nominal molecular cut-off membrane, i.e., a stainless steel Pellicon® system and 0.465 $m^2$ PTTK Cassette® (Millipore Corp.). In each case, the experiment was designed in such a fashion that non-filtered media were returned to the fermentation reservoir.

The filter membrane could be regenerated or restored to near original condition. This is something not possible when conventional antifoam emulsions or high silica filled antifoaming agents are employed, by washing the filter membranes with pure water at temperatures around 25° C. The flux rate was restored to 88 % of its original clear water flux rate following cold water flushing. While organic glycol ether based antifoaming agent not appear to irreversibly foul ultrafilter membrances, the high concentration required to control foaming in submerge growth fermentations is disadvantageous when compared to only 25 ppm of Compound IX.

**Example E**

The antifoam efficiency of Sentry Simethicone Emulsion L.S.®, a conventional silicone antifoaming agent was determined by adding with a micropipette increments of the antifoaming agent to 11 liters of a vigorously aerated broth liquor composition contained in a 14 liter glass measuring NBS Microferm fermentor© inoculated with E. Coli 104 at 37°C and aerated at 5 liters/minute of air at 400 rpm agitation. The broth liquor composition consisted of an aqueous dispersion of the ingredients mentioned in Example 2.

The test was carried out with the media at 37°C. Incremental addition of the conventional antifoaming agent to the foaming liquor was continued until foaming was suppressed for a period of at least 22 hours and the total addition (as parts per million) recorded. It was found that foaming was suppressed 22 hours with the addition of 1650 ppm of the conventional silicone antifoam emulsion at 37°C. A viable cell count at harvest was $7.2 \times 10^8$ cells/ml.

Filtration of the fermentation broth produced containing the silicone emulsion employed as a foam control agent at a concentration of 1650 ppm at 32°C, was evaluated. Initially, the filtration rate dropped as would be expected due to broth composition itself with or without antifoaming agent, however, after 5 minutes, the flux did not appear to plateau at a fixed rate but instead progressively decreased with time and within one hour, the flux was below 7 % of its original clean water flux rate and was continuing to drop. The flux did not remain constant over extended periods of time. The flux decrease is seen due to "coating" and "plugging" of the membrane surface with organic emulsifiers and inorganic silica filler of the membrane surface, and if left untreated the flux proceeds to extremes to the point of reducing filtration rates to zero at 1650 ppm, the concentration required to control foaming. These filtration studies were performed using a 30 000 nominal molecular weight cut-off membrane, i.e., a stainless steel Pellicon® system and 0.465 $m^2$ PTTK Cassette® (Millipore Corp.). In each case, the experiment was designed in such a fashion that non-filtered media were returned to the fermentation reservoir.

The fouled filter membrane could only be regenerated or restored partially after repeated washing of the filter membrane with pure water or one percent bleach solutions. The flux rate could only be restored to 39 % of its original clear water flux rate following standard cleaning techniques.

**Examples 5 - 7**

Compounds II, III, and IX were dissolved in water at ambient temperature to a concentration of 10 ppm. The aqueous solutions were then filtered via a nominal molecular weight filter of 10 000 Daltons, and the flux was measured over a period of 90 minutes. Although the flux dropped in each case, it levelled off immediately. Subsequent flushing with cold water restored the filter flux, in every case, to 100 % of the original flux. Additionally, even though Compound III has an average molecular weight of about 32 000 Daltons, far in excess of the nominal filter limit, fouling is not worse than with lower molecular weight analogs. There was little discernible performance differences between hydroxyand, methoxy- end/blocked polyether pendants. When the temperature of the solution during filtration rose to about 35°C, above the cloud points, the solutions were discernibly milky, and yet no greater fouling occurred. This result, which was unexpected, demonstrates that the minimal fouling which does occur with these materials is dynamic in nature and reaches a steady state or equilibrium, beyond which a further drop in flux does not occur.

**Table B**
**Fermentation Conditions**

| | | |
|---|---|---|
| Microorganism: | E.Coli 104 | |
| Media Composition: | Yeast Extract | 10 g/l |
| | Casein Hydrolysate | 5 g/l |
| | Glucose | 10 g/l |
| | $KH_2PO_4$ | 5 g/l |
| | $MgSO_4$ | 1 g/l |

Fermentation carried out in NBS Microferm® fermentors batched at 11 liters; temperature: 37°C; aeration: 5 liters/minute; agitation: 400 rpm.

## Claims

1. A method of controlling the foam in a process where ultrafiltration is subsequently performed characterized by adding at least 5 ppm silicone-alkylene oxide copolymer of the general formula:

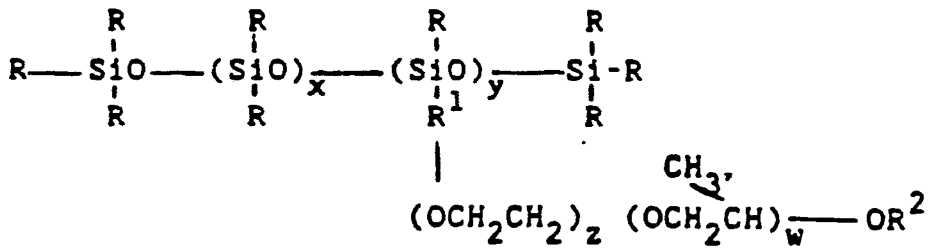

wherein

R is individually hydrogen or an alkyl group containing from 1 to 3 carbon atoms;

$R^1$ is an alkylene group containing from 3 to 6 carbon atoms;

$R^2$ is selected from hydrogen, an alkyl group containing 1 to 5 carbon atoms, an acyl group containing 1 to 5 carbon atoms or a trialkylsilyl group;

x has a value of 0 to 200;

y has a value greater than 1 but less than or equal to 80;

z has a value of 1 to 40, and whas a value of 5 to 120, with the proviso that only one R can be hydrogen bonded to any given silicon atom.

2. The method of claim 1 wherein R is a methyl group.

3. The method of claim 1 or 2 wherein $R^2$ is hydrogen or a methyl group.

4. The method of claims 1 to 3 wherein x has a value of 10 to 80, preferably of 13 to 30.

5. The method of claims 1 to 4 wherein y has a value of 3 to 50, preferably 3 to 13.

6. The method of claims 1 to 5 wherein z has a value of 5 to 15.

7. The method of claims 1 to 6 wherein w has a value of 15 to 45.

8. The method of claims 1 to 7 wherein the ratio of x/y is 0 to 10, preferably 2 to 7.

9. The method of claims 1 to 8 wherein the ratio of w/z is greater than 1 but less than 6, preferably equal to 3.

10. The method of claims 1 to 9 wherein the ratio of $\frac{(z+w)(y)}{(x+y)}$ is > 2, preferably about 5.

11. The method of claims 1 to 10 wherein the silicone-alkylene oxide copolymer is added in an amount up to 50 ppm.

**Patentansprüche**

1. Verfahren zur Regelung des Schaums bei einem Verfahren, bei dem anschließend eine Ultrafiltration durchgeführt wird, dadurch gekennzeichnet, daß man zumindest 5 ppm Silicon/Alkylenoxid-Copolymer der allgemeinen Formel:

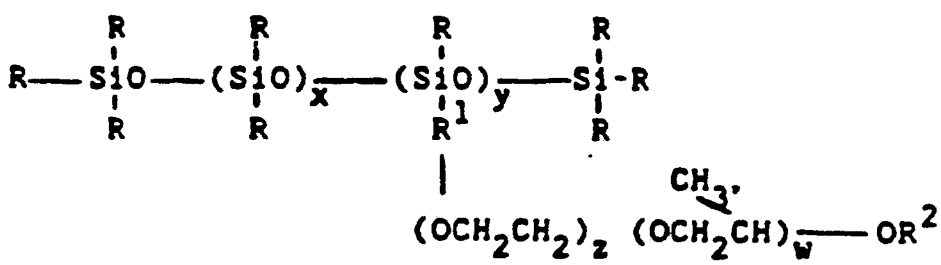

zusetzt, worin

R Wasserstoff oder eine Alkylgruppe mit 1 bis 3 Kohlenstoffatomen,

$R^1$ eine Alkylengruppe mit 3 bis 6 Kohlenstoffatomen,

$R^2$ Wasserstoff, eine Alkylgruppe mit 1 bis 5 Kohlenstoffatomen, eine Acylgruppe mit 1 bis 5 Kohlenstoffatomen oder eine Trialkylsilylgruppe bedeutet und

x 0 bis 200,

$y > 1$ jedoch $\leq 80$,

z 1 bis 40 und

w 5 bis 120 sein kann mit der Maßgabe, daß nur ein Substituent R an einem gegebenen Siliciumatom Wasserstoff sein kann.

2. Verfahren nach Anspruch 1, worin R eine Methylgruppe ist.

3. Verfahren nach Anspruch 1 oder 2, worin $R^2$ Wasserstoff oder eine Methylgruppe ist.

4. Verfahren nach Anspruch 1 bis 3, worin x 10 bis 80, Vorzugsweise 13 bis 30 ist.

5. Verfahren nach Anspruch 1 bis 4, worin y 3 bis 50, Vorzugsweise 3 bis 13 ist.

6. Verfahren nach Anspruch 1 bis 5, worin z 5 bis 15 ist.

7. Verfahren nach Anspruch 1 bis 6, worin w 15 bis 45 ist.

8. Verfahren nach Anspruch 1 bis 7, worin das Verhältnis x/y 0 bis 10, Vorzugsweise 2 bis 7 ist.

9. Verfahren nach Anspruch 1 bis 8, worin das Verhältnis $w/z > 1$, jedoch $< 6$, Vorzugsweise $= 3$ ist.

10. Verfahren nach Anspruch 1 bis 9, worin das Verhältnis $\frac{(z + w)(y)}{(x + y)} > 2$, vorzugsweise etwa 5 ist.

11. Verfahren nach Anspruch 1 bis 10, worin das Silicon/-Alkylenoxid-Copolymer in einer Menge bis zu 50 ppm zugesetzt wird.

## Revendications

1. Procédé pour inhiber le moussage dans une opération dans laquelle une ultrafiltration est effectuée par la suite, caractérisé par l'addition d'au moins 5 ppm d'un copolymère silicone-oxyde d'alxylène de formule générale:

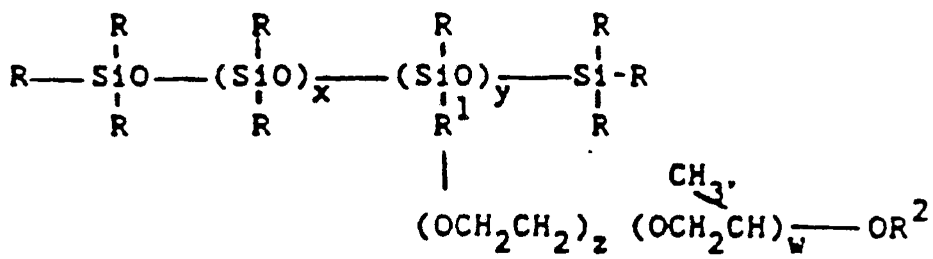

dans laquelle

R représente individuellement l'hydrogène ou un groupe alkyle contenant 1 à 3 atomes de carbone;

$R^1$ est un groupe alkylène contenant 3 à 6 atomes de carbone;

$R^2$ est choisi entre l'hydrogène, un groupe alkyle contenant 1 à 5 atomes de carbone, un groupe acyle contenant 1 à 5 atomes de carbone ou un groupe trialkylsilyle;

x a une valeur de 0 à 200;

y a une valeur supérieure à 1 mais inférieure ou égale à 80;

z a une valeur de 1 à 40 et

w a une valeur de 5 à 120, sous réserve qu'un seul groupe R puisse être de l'hydrogène lié à tout atome donné de silicium.

2. Procédé suivant la revendication 1, dans lequel R est un groupe méthyle.

3. Procédé suivant la revendication 1 ou 2, dans lequel $R^2$ est l'hydrogène ou un groupe méthyle.

4. Procédé suivant les revendications 1 à 3, dans lequel x a une valeur de 10 à 80, de préférence de 13 à 30.

5. Procédé suivant les revendications 1 à 4, dans lequel y a une valeur de 3 à 50, de préférence de 3 à 13.

6. Procédé suivant les revendications 1 à 5, dans lequel z a une valeur de 5 à 15.

7. Procédé suivant les revendications 1 à 6, dans lequel w a une valeur de 15 à 45.

8. Procédé suivant les revendications 1 à 7, dans lequel le rapport x/y a une valeur de 0 à 10, de préférence de 2 à 7.

9. Procédé suivant les revendications 1 à 8, dans lequel le rapport w/z est supérieur à 1 mais inférieur à 6, de préférence égal à 3.

10. Procédé suivant les revendications 1 à 9, dans lequel le rapport $\frac{(z + w)(y)}{(x + y)}$ est supérieur à 2 et a de préférence une valeur d'environ 5.

11. Procédé suivant les revendications 1 à 10, dans lequel le copolymère silicone-oxyde d'alkylène est ajouté en une quantité allant jusqu'à 50 ppm.